Europäisches Patentamt

European Patent Office

Office européen des brevets

(19)

(11) Numéro de publication: **0 021 862**
**B1**

(12) **FASCICULE DE BREVET EUROPEEN**

(45) Date de publication du fascicule du brevet: **30.11.83**

(51) Int. Cl.³: **G 01 S 13/74,**
**H 01 Q 21/28**

(21) Numéro de dépôt: **80400538.7**

(22) Date de dépôt: **21.04.80**

(54) **Dispositif de transmission de signaux de communication radiophonique dans un équipement de radar secondaire.**

(30) Priorité: **08.05.79 FR 7911630**

(43) Date de publication de la demande:
**07.01.81 Bulletin 81/1**

(45) Mention de la délivrance du brevet:
**30.11.83 Bulletin 83/48**

(84) Etats contractants désignés:
**CH DE GB IT LI NL SE**

(56) Documents cités:
**DE - C - 973 332**
**FR - A - 1 016 599**
**US - A - 2 966 675**
**US - A - 3 325 816**

(73) Titulaire: **THOMSON-CSF**
**173, Boulevard Haussmann**
**F-75379 Paris Cedex 08 (FR)**

(72) Inventeur: **Aubergeon, Olivier**
**"THOMSON-CSF" - SCPI 173, bld Haussmann**
**F-75360 Paris Cedex 08 (FR)**
Inventeur: **Cherier, Jacques**
**"THOMSON-CSF" - SCPI 173, bld Haussmann**
**F-75360 Paris Cedex 08 (FR)**
Inventeur: **Dupressoir, Albert**
**"THOMSON-CSF" - SCPI 173, bld Haussmann**
**F-75360 Paris Cedex 08 (FR)**

(74) Mandataire: **Benoit, Monique et al,**
**THOMSON-CSF SCPI 173, Bld Haussmann**
**F-75379 Paris Cedex 08 (FR)**

Courier Press, Leamington Spa, England.

## Dispositif de transmission de signaux de communication radiophonique dans un equipement de radar secondaire

La présente invention concerne un dispositif de transmission de signaux de communication radiophonique dans un équipement de radar secondaire. De façon plus précise, ces équipements radar sont équipés d'un dispositif d'interrogation connu sous l'abréviation I.F.F. et dans ces conditions comportent deux antennes, l'une directive, l'autre omnidirectionnelle ou non-directive présentant dans son diagramme de rayonnement des zones de gains nul ou très faible.

Ces deux antennes sont alimentées alternativement selon un séquence prédéterminée permettant à la réception d'obtenir des échos issus d'une même cible répondant à une loi d'amplitude ainsi prédéterminée qui permet de les démarquer d'échos parasites. De plus, les cibles interrogées, en général des avions, sont équipés de transpondeurs qui recevant les impulsions émises par le dispositif d'interrogation, émettent en réponse vers ce radar un signal codé permettant son identification. A ce stade de l'information sur la cible l'opérateur du radar entre, en général, en communication radiophonique directe avec la cible interrogée.

Selon l'art antérieur les antennes utilisées pour ces liaisons radiophoniques sont du type fouet ou sabre et sont disposées à proximité immédiate des antennes du dispositif d'interrogation surtout dans le cas où les équipements sont portés par exemple par un camion ou par un char. Ces antennes présentent plusieurs inconvénients:

—leur adaptation est difficile à cause du véhicule sur lequel elles sont en général fixées;

—leurs diagrammes de rayonnement peuvent présenter des zones angulaires à gain trés faible du fait de la présence de antennes du dispositif d'interrogation déterminant un obstacle qui perturbe le bon fonctionnement des antennes radiophoniques.

Le dispositif selon l'invention vise à remédier à ces inconvénients par l'utilisation de l'antenne non directive du dispositif d'interrogation comme antenne de transmission de signaux de communication radiophonique, comme cela est défini dans la revendication 1.

En effet il est connu (FR—A—1 016 599) un dispositif de transmission de signaux de communication radiophonique d'un poste répondeur au poste radar d'un système d'identification en utilisant une antenne non-directive. L'invention, dirigée vers une transmission en sens inverse, évite en outre la nécessité d'utiliser une antenne séparée pour les signaux de communication.

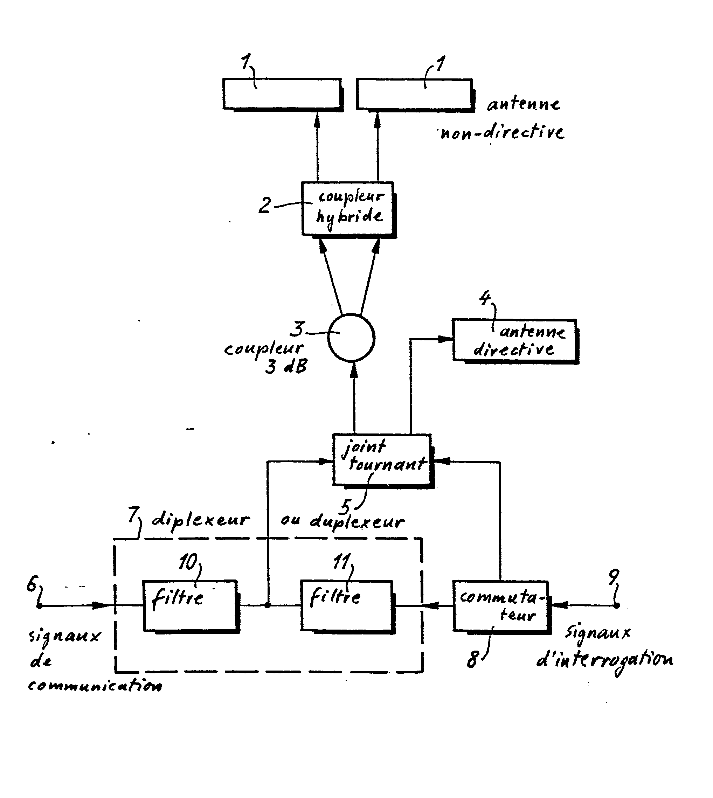

D'autres avantages et caractéristiques de l'invention apparaîtront dans les revendications dépendantes et dans la description qui suit à l'aide de la figure unique qui représente le schéma général du dispositif selon l'invention.

Ce dispositif comporte une antenne nondirective 1 connectée à un joint tournant 5 par l'intermédiaire d'un coupleur hydride 2 et d'un coupleur 3 du type coupleur 3dB. Un commutateur de voies 8 est connecté d'une part à une antenne directive 4 par l'intermédiaire du joint tournant 5 et d'autre part au coupleur 3 par l'intermédiaire d'un diplexeur ou duplexeur 7 et du joint tournant 5 également. Le diplexeur ou duplexeur 7 est connecté au circuit d'émission-réception de signaux de communication radiophonique par l'intermédiaire d'une borne 6; le commutateur de voies 8 est connecté au dispositif d'interrogation par l'intermédiaire d'une borne 9.

Tous ces circuits étant réciproques il est possible de ne raisonner que sur le mode émission, par exemple, comme ce sera le cas dans la suite de la description.

Le fonctionnement de ce dispositif est alors le suivant à l'émission:

—le fonctionnement du dispositif d'interrogation et la transmission radiophonique est simultanés.

Selon le mode de fonctionnement du dispositif d'interrogation, le commutateur de voies 8, transmet les signaux issus de la borne 9 alternativement à l'antenne directive 4 et à l'antenne nondirective 1. Le commutateur de voies 8 est directement commandé par le dispositif d'interrogation non représenté sur la figure. Pour une première position de ce commutateur de voies 8, les signaux issus de la borne 9 sont transmis à l'antenne directive 4 par l'intermédiaire du joint tournant 5. Pour une seconde position de ce commutateur de voies 8, les signaux issus de la borne 9 sont transmis au diplexeur ou duplexeur 7, puis à un coupleur 3 par l'intermédiaire du joint tournant 5. Ce coupleur 3 divise les signaux reçus en des signaux d'égales amplitudes qui sont transmis à un coupleur hybride 2. Les sorties de ce coupleur hybride 2 alimentent l'antenne nondirective 1.

Selon le mode de fonctionnement en transmission radiophonique, les signaux de la borne 6 sont issus du circuit d'émission-réception non représenté sur la figure. Ces signaux, par l'intermédiaire du diplexeur ou duplexeur 7 et du joint tournant 5 sont alors transmis au coupleur 3. Celui-ci, divise encore le signal reçu en deux signaux d'égales amplitudes qui sont appliqués au coupleur hybride 2.

Le coupleur hybride 2 est généralement conçu de telle façon que, alimenté par les signaux issus du dispositif d'interrogaation connecté à la borne 9, il alimente les deux parties de l'antenne nondirectives 1 avec des signaux en opposition de phase permettant ainsi d'obtenir un gain de l'antenne très faible dans la direction de son axe.

Les dispositifs d'interrogation utilisent des ondes dont les fréquences sont élevées (entre 600 MHz et 750 MHz ou voisines de 1030 MHz ou de 1090 MHz); par contre les fréquences des ondes radiophoniques sont notablement plus basses, généralement dans une gamme s'étendant de 200 MHz à 450 MHz.

De ce fait, pour les signaux utilisés dans les transmissions radiophoniques, le fonctionnement du coupleur hybride 2 est modifié; étant conçu pour délivrer les ondes en opposition de phase pour des fréquences élevées, il fonctionnera comme un simple diviseur d'énergie pour ces signaux à plus basse fréquence.

Les signaux issus de ce capteur hybride 2, alimentant l'antenne non directive 1, sont en phase, donnant ainsi un diagramme de rayonnement quasi-isotrope pour ces signaux de communication radiophonique.

Malgré une relative désadaptation pour les signaux de communication radiophonique de l'antenne non directive 1, l'expérience a montré que les performances de l'antenne non directive 1 pour la transmission de ces signaux sont bonnes, meilleures en tout état de cause que celles des antennes fouet ou sabre, les perturbations provoquées par la présence de l'antenne du dispositif d'interrogation n'existant plus. Le diagramme de rayonnement dû aux signaux issus du dispositif d'interrogation de l'antenne non directive 1 n'est pas perturbé par la superposition du diagramme de rayonnement dû aux signaux de communication radiophonique issus de la borne 6.

Le diplexeur ou duplexeur 7 peut être avantageusement réalisé par deux filtres 10 et 11 situés respectivement sur le chemin des signaux de communication radiophoniques issus de la borne 6 et de ceux issus du dispositif d'interrogation par l'intermédiaire du commutateur de voies 8. Un choix non limitatif consiste à utiliser pour le filtre 10 le type passe-bas et pour le filtre 11 le type basse-bande; la bande passante du filtre 11 est telle qu'elle entoure alors la fréquence utilisée par le dispositif d'interrogation, et la fréquence de rejection du filtre passe-bas 10 est choisie supérieure à la fréquence des signaux de communication radiophonique.

Le coupleur hydride 2 peut être d'un type quelconque, la seule condition pour son fonctionnement étant qu'il doit délivrer à partir de deux ondes en phase deux ondes en opposition de phase dans les domaines de fréquence utilisés par les dispositifs d'interrogation.

On a ainsi décrit un dispositif permettant la transmission par un unique groupement de deux antennes de signaux issus d'un dispositif d'interrogation et de signaux de communication radiophonique dans un système radar secondaire.

## Revendications

1. Dispositif de transmission de signaux de communication radiophonique dans un équipement de radar secondaire comportant une antenne non directive (1) à deux parties alimentée par les signaux d'interrogation à travers un commutateurs de voies (8), un diplexeur ou duplexeur (7), un joint tourant (5), un coupleur 3 dB (3) et un coupleur hybride (2), et une antenne directive (4) alimentée à travers le commutateur de voies (8) et le joint tournant (5), caractérisé en ce que les signaux de communication radiophonique sont transmis par l'antenne non directive (1) à travers le diplexeur ou duplexeur (7), le joint tournant (5), le coupleur 3 dB (3) et le coupleur hybride (2) délivrant aux deux parties de l'antenne non directive (1), pour les signaux de communication radiophonique, des signaux en phase et d'amplitudes égales.

2. Dispositif de transmission selon la revendication 1, caractérisé en ce que le diplexeur ou duplexeur (7) comporte un ensemble de deux filtres (10—11).

3. Dispositif de transmission selon la revendication 2, caractérisé en ce que les signaux de communication radiophonique sont transmis par un filtre passe-bas (10) et les signaux d'interrogation par un filtre passe-bande (11).

## Patentansprüche

1. Vorrichtung zur Uebertragung von Funkverbindungssignalen in einer Sekundärradareinrichtung mit einer zweiteiligen, über einen Kanalschalter (8) einen Diplexer oder Duplexer (7), eine Drehverbindung (5), eine 3-dB-Verbindungsvorrichtung (3) und eine Hybridverbindungsvorrichtung (2), mit den Anfragesignalen gespeiste ungerichteten, sowie mit einer über den Kanalschalter (8) und die Drehverbindung (5) gespeiten gerichteten Antenne (4), dadurch gekennzeichnet, dass die Funkverbindungssignale durch die nicht gerichtete Antenne (1) über den Diplexer oder Duplexer (7) übertragen werden, wobei die Drehverbindung (5), die 3-dB-Verbindungsvorrichtung (3) und die Hyridverbindungsvorrichtung (2) für die Funkverbindungssignale an die beiden Teile der nicht gerichteten Antenne (1) gleichphasige Signale mit gleichen Amplituden abgibt.

2. Uebertragungsvorrichtung nach Anspruch (1), dadurch gekennzeichnet, dass der Diplexer oder Duplexer (7) eine aus zwei Filtern (10, 11) gebildete Einheit aufweist.

3. Uebertragungsvorrichtung nach Anspruch 2, dadurch gekennzeichnet, dass die Funkverbindungssignale durch ein Tiefpassfilter (10) und die Anfragesignale durch ein Hochpassfilter (11) übertragen werden.

## Claims

1. A device for transmitting radio communication signals in a secondary Radar equipment comprising a non directional antenna (1) with two portions, fed with the interrogation signals through a channel commutator (8), a diplexer or duplexer (7), a rotative joint (5), a 3-dB-coupler (2), as well as a directional antenna (8) fed through said channel commutator (8) and said rotative joint (5), characterized in that the radio communication signals are transmitted by the non directional antenna (1) through the diplexer or duplexer (7), the rotative joint (5), the 3-dB-coupler (3) and the hybrid coupler (2) delivering to said two portions of the non directional antenna (1), for the radio communication signals, cophasal signals having equal amplitudes.

2. A transmission device according to claim 1, characterized in that the diplexer or duplexer (7) comprises a unit including two filters (10, 11).

3. A transmission device according to claim 2, characterized in that the radio communication signals are transmitted by a low-pass filter (10), while the interrogation signals are transmitted by a high-pass filter (11).

0 021 862

1